# EUROPEAN PATENT SPECIFICATION

(11) **EP 2 850 036 B1**
(45) Date of publication and mention of the grant of the patent: **26.02.2020**
(21) Application number: 13723135.3
(22) Date of filing: 15.05.2013
(51) Int. Cl.: C03C 3/085, C03C 10/00

(54) **TRANSPARENT, ESSENTIALLY COLORLESS AND NON-DIFFUSING BETA-QUARTZ GLASS-CERAMICS; ARTICLES IN SAID GLASS-CERAMICS; PRECURSOR GLASSES.**
TRANSPARENTE, NAHEZU FARBLOSE UND DIFFUSIONSLOSE BETA-QUARZ-GLASKERAMIK, GEGENSTÄNDE AUS DIESER GLASKERAMIK, VORLÄUFERGLAS
VITROCÉRAMIQUES DE -QUARTZ TRANSPARENTES, SENSIBLEMENT INCOLORES ET NON DÉPOLIES ; ARTICLES COMPOSÉS DESDITES VITROCÉRAMIQUES ; VERRES PRÉCURSEURS

(30) Priority: 15.05.2012 FR 1254420
(43) Date of publication of application: 25.03.2015
(73) Proprietor: Eurokera, 77640 Jouarre (FR)
(72) Inventor: MELSCOET-CHAUVEL, Isabelle, F-77590 Bois-Le-Roi (FR); COMTE, Marie Jacqueline Monique, F-92260 Fontenay Aux Roses (FR)
(74) Representative: Cabinet Beau de Loménie
(86) International application number: PCT/EP2013/060099
(87) International publication number: WO 2013/171288

(56) References cited:
- EP-A1- 1 146 018
- EP-A1- 1 837 312
- EP-A1- 2 284 131
- WO-A1-2011/089220
- JP-A- 2001 316 132
- US-A- 4 438 210

## Description

The invention relates to the field of transparent, essentially colorless and non-diffusing β-quartz glass-ceramics. More particularly it deals with:
- transparent, essentially colorless and non-diffusing glass-ceramics of the lithium aluminosilicate type, containing a solid solution of β-quartz as main crystalline phase, free of As₂O₃ and of Sb₂O₃;
- articles in said glass-ceramics;
- lithium aluminosilicate glasses, precursors of such glass-ceramics; as well as
- methods for elaborating said glass-ceramics and said articles in said glass-ceramics.

The glass-ceramics of the invention, the composition of which contains neither As₂O₃, nor Sb₂O₃, show very interesting optical properties, most particularly in terms of transmission, non-diffusion and yellow index. Moreover, they present low thermal expansion and they are easily obtained insofar that their precursor glasses have low high temperature viscosity, viscosities at liquidus compatible with their forming method and ceramming cycles of short duration.

The Applicant has been producing (from precursor lithium aluminosilicate glasses) and marketing, since the early 90's, β-quartz glass-ceramics having low thermal expansion coefficients (< 10 x 10⁻⁷ K⁻¹ between 25 and 700°C, or even comprised between - 3 and + 3 x 10⁻⁷ K⁻¹ between 25 and 700°C). Such glass-ceramics are for example used as cooking top plates, cooking utensils, microwave oven plates, chimney windows, fireplace inserts, fireproof doors and windows, stove and oven windows, notably with pyrolysis or catalysis, and shields (transparent armors). Such glass-ceramics may be colored (cf. notably the black cooking top plates) or transparent and non-colored (cf. notably most of the fireproof doors and windows, the cooking top plates for induction heating (with colored lower layers which are desirably perfectly visible) and the shields).

For obtaining such glass-ceramics (for, more specifically removing gas inclusions from the precursor molten glass mass), conventional fining agents: As₂O₃ and/or Sb₂O₃ have been used for a long time. The use of these conventional fining agents is notably illustrated in US Patent Nos. 4,438,210 and 5,070,045. Said US patent No. 4,438,210 teaches that Ti-Fe interaction would be responsible for the appearance of a coloration upon ceramming and that the absence of MgO would give the possibility of avoiding this coloration; this, in the presence of As₂O₃.

With view to the toxicity of As₂O₃ and of increasingly strict regulations in effect, this toxic fining compound is desirably no longer used. For environmental considerations, it was also desired to no longer use Sb₂O₃ and not use halogens, such as F and Br, which would have been able to replace at least partly said conventional fining agents As₂O₃ and Sb₂O₃ set aside.

SnO₂ was proposed as a replacement fining agent. It is increasingly used to this day. It is notably timely used when the precursor glass of the glass-ceramic (glass plate precursors of glass-ceramic plates, in fact) is obtained by floating. Indeed, applied with glasses containing As₂O₃ and/or Sb₂O₃ in their composition, such a floating method generates glass plates with a metal deposit at their surface (a metal deposit resulting from the reduction of As₂O₃ and/or Sb₂O₃). US Patent Nos. 6,846,760 and 8,053,381 thus describe the obtaining of glass-ceramics from glasses, themselves obtained by floating and the composition of which contains SnO₂ as a fining agent.

The use of SnO₂ as a fining agent however has two major drawbacks. This compound is less efficient than As₂O₃ (and, in absolute terms, it should therefore be used in a relatively large amount, which is not without posing any problems, more particularly of devitrification) and, as a more powerful reducing agent than As₂O₃ and Sb₂O₃, it is responsible for the appearance of an undesirable yellowish coloration during ceramming. This second drawback is of course a real nuisance when it is sought to obtain transparent, essentially colorless glass-ceramics.

This yellowish coloration results from Sn-Fe, Sn-Ti and Ti-Fe interactions (by charge transfer). One skilled in the art is actually aware that glass-ceramic precursor glass compositions inevitably contain iron and generally TiO₂ as a nucleation agent.

In order to limit or even avoid this yellowish coloration phenomenon, which is quite undesirable, within a context for preparing transparent, essentially colorless glass-ceramics, two different approaches have been suggested to this day.

The first consists of adding into the composition of the precursor glass at least one complementary coloring agent or compensating dye, which may also be described as a discoloration agent. The use of Nd₂O₃, for this purpose was described in US Patent No. 8,053,381 already mentioned above. Glass-ceramic plates containing this dye, in a substantial amount, are to this day marketed by Schott (DE) under the trademark Pyran® Platinum. The use of expensive dyes of this type is detrimental to the transmission of glass-ceramics. It inevitably causes a loss of a few percents of the integrated transmission.

The second approach consists, in order to limit or even avoid any Sn-Ti and Ti-Fe interaction, of limiting or even avoiding the presence of TiO₂ within the composition of the precursor glasses. Both of these alternatives - presence of TiO₂ at a limited level and absence of TiO₂-were respectively described in US Patent Application Publication Nos. 2010/0167903 and 2010/0099546 of the Applicant. They also have drawbacks. Compositions without TiO₂ or with a limited TiO₂ content, require ceramming treatments of long duration. Moreover, compositions without TiO₂ possess very high liquidus temperatures and are difficult to produce at an industrial scale.

JP Patent Application No. 2001-316132 discloses transparent β-quartz glass-ceramics of the lithium aluminosilicate type showing a thermal expansion coefficient approximating the one of silica as well as a high UV-rays transmittance. Said glass-ceramics are more particularly suitable for case material of a device of optical communication such as an optical coupler. Their composition contains 50 ppm or less of Fe₂O₃. Such a requirement is very severe and implies the use of raw materials having a high degree of purity. Obtaining such a low level of iron appears very difficult and expensive in industrial conditions.

EP patent application No. 1 146 018 discloses a flat float glass that can be transformed into a glass-ceramic with high quartz mixed crystals. To eliminate undesirable surface defects during floating and to achieve superior characteristics of the glass or the glass-ceramic, in particular with regard to a low coefficient of thermal expansion and high light transmittance, the glass has a concentration of less than 300 ppb Pt, les than 30 Rh, less than 1.5 wt.% ZnO and less than 1 wt.% SnO₂, and is refined during melting without the use of As₂O₃ and/or Sb₂O₃.

In such context, the inventors propose transparent, essentially colorless (having a minimized yellow index) and non-diffusing β-quartz glass-ceramics of the lithium aluminosilicate type, obtained under advantageous, easily industrializable application conditions, from lithium aluminosilicate glass compositions free of As₂O₃ and of Sb₂O₃, containing SnO₂ as a fining agent, TiO₂ and ZrO₂ as nucleation agents (one skilled in the art being aware that SnO₂ also acts as a nucleation agent) and not containing any rare earth oxide (which may provide the compensating coloring agent function).

The glass-ceramics of the present invention have optical properties similar to the ones of the glass-ceramics of the prior art of the same type obtained with the use of As₂O₃ and/or Sb₂O₃ as fining agent (such as the transparent and essentially colorless glass-ceramics of US Patent No. 5,070,045). They generally have yellow indexes of less than 14, or even of less than 12, for a thickness of 5 mm, an integrated transmission of more than 81%, or even more than 84%, for the same thickness as well as a diffusion percentage at this thickness, of less than 2.5%, or even less than 1.5%.

They present low thermal expansion.

They are obtained at the end of short duration ceramming cycles insofar as they contain an effective amount of nucleation agents, notably of TiO₂. They actually are easily obtained, as indicated above and specified below, with easy application, even at an industrial scale.

According to its first object, the present invention therefore relates to glass-ceramics:
- of the lithium aluminosilicate (LAS) type: they contain Li₂O, Al₂O₃ and SiO₂ as essential constituents of the β-quartz solid solution (see below);
- containing a β-quartz solid solution as a main crystalline phase: said β-quartz solid solution accounts for more than 80% by weight of the total crystallized fraction. It even generally accounts for more than 90% by weight of said total crystallized fraction;
- which are transparent, essentially colorless and non-diffusing: these notions are familiar to one skilled in the art.

+ The transparence is apprehended here by the integrated transmission TL (%), as defined by the ASTM D1003-00 standard. Standard integrated transmission measurements cover the spectral range of 380 - 780 nm.

Said transparence is as high as possible. The glass-ceramics of the invention are transparent glass-ceramics in that they have for a thickness of 5 mm, an integrated transmission of more than 81%, advantageously more than 84%.

+ The essentially colorless nature is apprehended here by the yellow index (YI). The formula for calculating this index, known to one skilled in the art, is the following: YI_{ASTM E313} = [100 x (1.28X-1.06Z)]/Y, wherein X, Y and Z represent the tristimulus coordinates of the sample, calculated for a CIE illuminate C and an observer at 2°.

Said yellow index is as low as possible. The glass-ceramics of the invention are essentially colorless glass-ceramics in that they have for a thickness of 5 mm, a yellow index most certainly of less than 14, advantageously less than 12 and very advantageously less than 10.

+ The glass-ceramics of the invention moreover should not have a diffusing nature. Indeed, the lower the diffusion, the better is the appearance (and therefore the optical quality) of the material. The diffusion is calculated in the following way: % Diffusion = (Tdiffuse/Ttotal)x100, Tdiffuse being the integrated diffused transmission (%) and Ttotal being the integrated transmission (%). The measurement of diffusion is carried out according to the ASTM D1003-00 standard (with the use of an integrating sphere).

The glass-ceramics of the invention are essentially non-diffusing in that they have, for a thickness of 5 mm, a diffusion percentage of less than 2.5%, advantageously less than 1.5%.

The glass-ceramics of the invention, the precursor glass of which was fined with SnO₂, are, with reference to these notions of transparence, absence of coloration (yellowish coloration mentioned above) and of non-diffusing nature, as performing as glass-ceramics of the prior art, the precursor glass of which was fined with As₂O₃ and/or Sb₂O₃, such as those described in US Patent No. 5,070,045. In this, the glass-ceramics of the invention are original and of particular interest;
- which present interesting low thermal expansion: CTE < 10 x 10⁻⁷ K⁻¹ between 25 and 700°C, preferably between - 3 and + 3 x 10⁻⁷ K⁻¹ between 25 and 700°C; and
- which, in addition, are easily obtained, even at an industrial scale:
   + their precursor glasses display a low viscosity at high temperature: (a temperature T_{300 poises} < 1,690°C is targeted (advantageously T_{300 poises} < 1,670°C, very advantageously T_{300 poises} < 1,660°C). As the glasses are fined without arsenic oxide but with tin oxide that is less efficient, it has been observed that a low viscosity at high temperature is advantageous to favor fining;
   + their precursor glasses display a high resistance to devitrification with a liquidus temperature lower than 1400°C and a viscosity at the liquidus higher than 3000 Poises. Such characteristics are compatible with float or rolling processes; and
   + they are obtained at the end of short duration crystallization thermal treatments cycles insofar that they contain an effective amount of nucleation agents, notably of TiO₂. The duration of this thermal treatment is obviously very dependent on the furnace used and of the size of the pieces concerned. However ceramming on lab samples can be performed in less than 3 hours.

In a characteristic way:
- the composition (note that each range specified below and more generally specified all along this text include its limits) of the glass-ceramics of the invention, free of arsenic oxide, antimony oxide and rare earth oxide, except for inevitable trace amounts, contains, expressed as percentages by weight of oxides:
   62-72% of SiO₂,
   20-23% of Al₂O₃,
   2.8-5% of Li₂O,
   0.1-0.6% of SnO₂,
   1.9-4% of TiO₂,
   1.6-3% of ZrO₂,
   less than 0.4% of MgO,
   0.4-3% of ZnO and 2.1-5% of BaO with 2.5-6% of ZnO + BaO + SrO, less than 250 ppm of Fe₂O_{3;} and
- the crystallites present in the β-quartz solid solution (in large majority in the crystalline phase) have an average size of less than 35 nm, advantageously less than 30 nm.

This notion of average crystallite size is familiar to one skilled in the art. It is measured conventionally by using a Rietveld refinement method of X-ray diffraction spectra.

The composition of the glass-ceramics (of the LAS type) of the invention contains:
- from 62 to 72% of SiO₂,
- from 20 to 23% of Al₂O₃, and
- from 2.8 to 5% of Li₂O.

The SiO₂ content (≥ 62%) should be suitable for obtaining a sufficiently viscous precursor glass, in order to limit the problems of devitrification. The SiO₂ content is limited to 72% insofar that the higher the SiO₂ content, the more difficult it is to melt the composition. Said content is advantageously between 63 and 69% (limits included).

With regards to Al₂O₃: excessive amounts (> 23%) make the composition more prone to devitrification (to formation of mullite for example), which is not desirable. Conversely, too small amounts (< 20%) are unfavorable for nucleation and for forming small β-quartz crystallites. A content between 20 and 22% (limits included) is advantageous;
Li₂O: excessive amounts (> 5%) are favorable to devitrification while too small amounts (< 2.8%) significantly increase the high temperature viscosity. A content between 3 and 4.5 (limits included) is advantageous; a content between 3 and 4 (limits included) is very advantageous.

The composition of the glass-ceramics of the invention neither contains As₂O₃, nor Sb₂O₃ or only contains traces of at least one of these toxic compounds; SnO₂ being present instead and in place of these conventional fining agents. If trace amounts of at least one of these compounds are present, this is as a contaminating compound, due for example to the presence in the batch mixture of raw materials able to vitrify, of recycled materials of cullet type (from former glass-ceramics refined with these compounds). In any case, only trace amounts of these toxic compounds may be present: As₂O₃ + Sb₂O₃ < 1,000 ppm.

The composition of the glass-ceramics of the invention does not contain any rare earth oxide either, i.e. coloring agents (oxides), such as Nd₂O₃, capable of providing the role of a discoloration agent or compensating coloring agent, in the presence of SnO₂ as a fining agent. Such a rare earth oxide is not added intentionally and its content in the composition of the glass-ceramics of the invention, if not equal to 0, is in any way 50 ppm or less.

In the presence of SnO₂, as fining agent, in order to obtain the sought result - more particularly, the optical properties sought: very interesting optical transmission, diffusion and yellow index properties - the inventors suggest an original approach:
- different, in the absence of a rare earth oxide (see above), from that of US Patent No. 8,053,381, and also,
- different from that according to US Patent Application Publication Nos. 2010/0099546 and 2010/0167903, insofar that the compositions of the glass-ceramics of the invention contain a substantial amount of TiO₂.

The compositions of the glass-ceramics of the invention in fact contain effective amounts of fining agent: from 0.1 to 0.6% of SnO₂ and of nucleation agents: from 1.9 to 4% of TiO₂ and from 1.6 to 3% of ZrO₂.

The original approach of the inventors is essentially based 1) on the absence or the presence of MgO only in a low content (less than 0.4%), 2) on the presence of a low Fe₂O₃ content (less than 250 ppm) and 3) on the presence of small β-quartz crystallites.
1) The inventors have surprisingly shown that by minimizing the MgO content, it is both possible to considerably increase (maximize) the integrated transmission and to notoriously reduce (minimize) the yellow index. The absence of MgO has already been recommended in US Patent No. 4,438,210, in order to avoid a brownish coloration in a system fined with arsenic. However, it was far from being obvious that the fact of minimizing, or even completely avoiding the presence of MgO, would be beneficial to the lowering of the yellow index and to maximization of the transmission in a system fined with tin. Moreover the difficulty was to determine which element(s) is (are) able to compensate for MgO, keeping an acceptable set of properties (not only optical properties such as transmission and color but also high temperature viscosity, resistance to devitrification, CTE...): within the compositions of these LAS type glasses, MgO is known to be efficient to decrease high temperature viscosity, it also tends to improve devitrification and has an intermediate effect on CTE. The inventors have found that ZnO and/or BaO and/or SrO were the best substitutes.
2) A limited Fe₂O₃ content (< 250 ppm) allows limitation of the Fe-Ti and Fe-Sn interactions, thereby minimizing color and maximizing integrated transmission.
3) It was also observed that a small average size of β-quartz crystallites (< 35 nm and advantageously < 30 nm) is favorable for obtaining high integrated transmission and low coloration. This small average crystallite size is related to the quality of nucleation, therefore to the presence of nucleation agents: TiO₂, in an amount of 1.9-4% by weight (advantageously between 2 and 3% by weight) and ZrO₂, in an amount of 1.6-3% by weight (advantageously between 1.6 and 2% by weight) and to the ceramming. Moreover, one is aware that the fining agent SnO₂ is also involved in the nucleation process.

With regards to the low diffusion percentage exhibited by the glass-ceramics of the invention, it is also related to the size of the crystallites, as well as to their number. It itself also depends on the quality of nucleation, and therefore on the presence of nucleation agents and of the ceramming heat treatment.

The glass-ceramics of the invention therefore have in a characteristic way, crystallites (present in the β-quartz solid solution, which is in a large majority in the crystalline phase) with an average size of less than 35 nm, advantageously less than 30 nm (these values may be compared with the values of 40-61 nm given for the exemplified glass-ceramic crystallites of US Patent No. 6,846,760) and a composition, free of As₂O₃, of Sb₂O₃ and of rare earth oxide, which contains:
- SnO₂, as a fining agent, in an amount of 0.1-0.6% (advantageously 0.1-0.4%) by weight: the presence of SnO₂ (in the absence of conventional fining agents) is necessary for the final quality of the glass-ceramic. Said SnO₂, a fining agent, also contributes to nucleation. However, it is involved in a limited amount (≤ 0,6%), with reference to the technical coloration («yellow») problem of said glass-ceramics (see above) and also with reference to the technical problem of high temperature devitrification;
- TiO₂ and ZrO₂, as nucleation agents, in an amount of 1.9-4% (advantageously 2-3%) for TiO₂ and 1.6-3% (advantageously 1.6-2%) for ZrO₂. The presence of ZrO₂ allows a limitation of TiO₂ presence. Said TiO₂ is present in an adequate amount for the sought effect on nucleation but in a limited amount with reference to the technical coloration problem (explained above). Said ZrO₂ completes the action of said TiO₂ on nucleation, but cannot be involved in a larger amount insofar that it then generates devitrification problems;
- MgO: only in a small amount (less than 0.4%, advantageously less than 0.1%), with reference to the sought strong transmission and low yellow index. Most advantageously, the composition of the glass-ceramics of the invention is also free of MgO except for inevitable trace amounts. It is understood that according to this most advantageous alternative, MgO was not added and is only likely to be present as trace amounts (of less than 500 ppm), notably because of the use of recycled raw materials;
- ZnO + BaO + SrO: for compensating the low MgO content, or even the absence of MgO, and most particularly
   - for maintaining the high temperature viscosity of the precursor glasses to acceptable values (a temperature T_{300 poises} < 1,690°C is targeted, advantageously T_{300 poises} < 1,670°C, very advantageously T_{300 poises} < 1,660°C) for applying the melting step as well as an effective fining, and
   - for obtaining an interesting thermal expansion coefficient of the glass-ceramics (CTE < 10 x 10⁻⁷ K⁻¹ between 25 and 700°C, preferably between - 3 and + 3 x 10⁻⁷ K⁻¹ between 25 and 700°C),
   a consequent provision of ZnO + BaO + SrO is advisable (2.5% ≤ ZnO + BaO + SrO ≤ 6%, advantageously 3.5% ≤ ZnO + BaO + SrO ≤ 5%). The compositions of the glass-ceramics of the invention therefore contain, in consequent amounts, ZnO + BaO + SrO. Preferably, said compositions do not contain any SrO (no added SrO, an expensive raw material; in any way, within said preferred composition: SrO < 1000 ppm) and therefore contain: 2.5% ≤ ZnO + BaO ≤ 6%, advantageously 3.5% ≤ ZnO + BaO ≤ 5%.

The compositions of the glass-ceramics of the invention actually contain:
+ from 0.4 to 3% of ZnO, most advantageously from 1.6 to 2% of ZnO: ZnO is most particularly involved for lowering the high temperature viscosity of the precursor glass as well as for lowering the thermal expansion coefficient of the glass-ceramic (see above). A large amount of ZnO (ZnO is then at most involved in an amount of 6% by weight, and preferably at most in an amount of 3% by weight (see above)) may significantly lower the thermal expansion coefficient of the glass-ceramic; and
+ from 2.1 to 5% of BaO (e.g., from 2.1 to 4%; e.g. from 2.5 to 4%) of BaO: BaO also has the property of lowering the high temperature viscosity of the glass (see above). It is less efficient than ZnO to decrease the high temperature viscosity but it gives the possibility of limiting devitrification and adjusting the CTE. Surprisingly it has been found that an increase of BaO is less detrimental to properties than corresponding increases of CaO, Na₂O and K₂O. It has especially no negative impact on optical diffusion. A large amount of BaO (BaO is at most involved in an amount of 6% by weight and preferably at most in an amount of 5% by weight (see above)) leads to insufficient formation of β-quartz.

More preferably, the compositions of the glass-ceramics of the invention contain from 2.5 to 5% of BaO.

Said compositions may contain from 0 to 5% of SrO (being understood that 2.5% ≤ ZnO + BaO + SrO ≤ 6%). Preferably, as indicated above, they do not contain any SrO (SrO<1000 ppm).

The compositions of the glass-ceramics of the invention contain both ZnO and BaO (with or without SrO, advantageously without SrO).

According to a preferred variant (based on the above statements), the glass-ceramics of the invention contain from 0.4 to 3% of ZnO, from 2.1 to 5% of BaO and from 0 to 5% of SrO (being understood that 2.5% ≤ ZnO + BaO + SrO ≤ 6%) in their composition. Within said preferred variant, the glass-ceramics with 0.4 to 3% of ZnO and 2.1 to 5% of BaO (and no SrO (in any way, less than 1000 ppm of SrO)) in their composition are more particularly preferred. The advantageous sub-ranges, 1.6 to 2% for ZnO and 2.5 to 5% for BaO, independently or in combination, obviously exist within said preferred variant.

According to another preferred variant, the glass-ceramics of the invention contain from 0.4 to 2% of ZnO and 2.1 to 5% of BaO (and no SrO, in any way less than 1000 ppm of SrO) in their composition.

According to these variants the properties of the glass-ceramic are more particularly optimized in term of high temperature viscosity, devitrification, transmission, color and CTE).
- Fe₂O₃: at less than 250 ppm (advantageously at less than 180 ppm, it is generally difficult to obtain a value below 100 ppm because of the presence of iron in the raw materials used). The compositions of the glass-ceramics of the invention actually: usually contain Fe₂O₃ at a content between 70 ppm (see examples 3 and 4) and less than 250 ppm, more usually Fe₂O₃ at a content between 80 ppm and less than 180 ppm, and still more usually Fe₂O₃ at a content between 100 ppm and less than 180 ppm. It was understood that here also, Sn-Fe, Ti-Fe charge transfers, responsible for coloration (which one seeks to avoid) should be limited. It has to be emphasized that the glass-ceramics of the invention show very interesting optical properties without requiring a very low level of Fe₂O₃ within their composition.

Let us recall here that the glass-ceramics of the invention are of the lithium aluminosilicate type and that they contain a β-quartz solid solution as a main crystalline phase; said β-quartz solid solution accounting for more than 80% by weight of the total crystallized fraction. In fact, said β-quartz solid solution generally accounts for more than 90% by weight of said total crystallized fraction.

According to a preferred alternative, the composition of the glass-ceramics of the invention, expressed as a percentage by weight of oxides, contains, for at least 97% (preferably for at least 99%, or even for 100%) of its weight:

| | |
|---|---|
| SiO₂ | 62-72 |
| Al₂O₃ | 20-23 |
| Li₂O | 2.8-5 |
| TiO₂ | 1.9-4 |
| ZrO₂ | 1.6-3 |
| SnO₂ | 0.1-0.6 |
| MgO | less than 0.4% |
| ZnO | 0.4-3 |
| BaO | 2.1-5 |
| SrO | 0-5 |
| CaO | 0-1 |
| Na₂O | 0-1 |
| K₂O | 0-1 |
| Fe₂O₃ | less than 250 ppm |
| CoO | 0-30 ppm |
| P₂O₅ | 0-3. |

It is here recalled for all practical purposes, that within said composition, one has: 2.5% ≤ ZnO + BaO + SrO ≤ 6%, advantageously 3.5% ≤ ZnO + BaO + SrO ≤ 5% (and most advantageously no SrO), and that the teachings given above for each one of the compounds (more particularly for MgO and Fe₂O₃) of the compositions of the glass-ceramics of the invention apply for said specified composition.

The ingredients listed above may quite account for 100% by weight of the composition but the presence of at least one other compound in a small amount (of less than or equal to 3% by weight) cannot *a priori* be totally excluded, substantially not affecting the properties of the glass-ceramic.

The following elements may notably be present, at a total content of less than or equal to 3% by weight, each of them at a total content of less than or equal to 2% by weight: Nb₂O₅, Ta₂O₅, WO₃ and MoO₃.

With regards to each of the identified constituents, their action and their involved amount, reference is made to the remarks above.

With regards to Na₂O, K₂O and CaO, they are conventionally involved, with reference to the high temperature viscosity (the more they are present « in a large amount », the more said viscosity decreases) and to the thermal expansion coefficient (they allow adjustment of this coefficient by increasing it). Used in too large amounts (>1%), they are detrimental to color and increase diffusion of the final glass-ceramic (see above).

The presence of CoO may be advisable for optimizing the optical properties. CoO is an inexpensive coloring oxide (it is not a rare earth oxide), the presence of which, in a very small amount (≤ than 30 ppm, generally ≤ than 10 ppm), may further improve a yellow index which is already very low. The presence of more than 30 ppm of CoO gives the glass-ceramic a pink color.

P₂O₅ may advantageously be involved as a manufacturing aid; it is notably involved for lowering the high temperature viscosity, in order to promote dissolution of ZrO₂ and for limiting devitrification. Its presence is however in no way compulsory. Without any P₂O₅ or in the presence of very weak amounts of P₂O₅ (2%, and less than 2%), it is quite possible obtaining the glass-ceramics of the invention.

It is recalled that the composition given above is free of As₂O₃, of Sb₂O₃, of rare earth oxide and that it is also advantageously free of MgO.

More preferred glass-ceramics of the invention have the compositions A and B hereafter (compositions for at least 97% of their weight, preferably for at least 99%, or even for 100% of their weight), expressed as percentages by weight of oxides):

| | A | B |
|---|---|---|
| SiO₂ | 63-69 | 63-69 |
| Al₂O₃ | 20-22 | 20-22 |
| Li₂O | 3-4.5 | 3-4 |
| TiO₂ | 2-3 | 2-3 |
| ZrO₂ | 1.6-2 | 1.6-2 |
| SnO₂ | 0.1-0.4 | 0.1-0.4 |
| MgO | less than 0.1% | less than 0.1% |
| ZnO | 0.4-2 | 1.6-2 |
| BaO | 2.1-5 (advantageously from 2.1-4) | 2.1-5 (advantageously from 2.5 to 5) |
| CaO | 0-1 | 0-1 |
| Na₂O | 0-1 | 0-1 |
| K₂O | 0-1 | 0-1 |
| Fe₂O₃ | less than 180 ppm | less than 180 ppm |
| CoO | 0-10 ppm | 0-10 ppm |
| P₂O₅ | 0-2 | 0-2. |

It is here recalled for all practical purposes, that within said compositions A and B, one has (in the absence of SrO): ZnO + BaO ≤ 6%, advantageously ZnO + BaO ≤ 5%, that the teachings given above for each one of the compounds (more particularly for BaO, for MgO and Fe₂O₃) of the compositions of the glass-ceramics of the invention apply for said compositions A and B and that said compositions A and B may moreover contain under conditions specified above, Nb₂O₅, Ta₂O₅, WO₃ and MoO₃.

It is recalled that the compositions given above are free of As₂O₃, of Sb₂O₃, of rare earth oxide and that they are also advantageously free of MgO.

It is recalled incidentally here that the glass-ceramics of the invention (the precursor of glass of which has been fined with SnO₂) have an integrated transmission, for a thickness of 5 mm, of more than 81%, advantageously more than 84%, a yellow index, for a thickness of 5 mm of less than 14, advantageously less than 12 (and most advantageously, less than 10), and a diffusion percentage for a thickness of 5 mm, of less than 2.5%, advantageously less than 1.5%. Thus they are as performing as glass-ceramics of the prior art, the precursor glass of which has been fined with As₂O₃ and/or Sb₂O₃, as described in US Patent No. 5,070,045.

According to a second object, the present invention relates to articles at least partly, advantageously totally consisting of a glass-ceramic of the invention as described above. Advantageously, said articles totally consist of a glass-ceramic of the invention. Said articles may notably consist in a fireproof door or window, in a cooking top plate (for induction heating with colored lower layers, which are desirably perfectly visible) or in a shield (transparent armor). Of course it is quite understood that the glass-ceramics of the invention are logically *a priori* used in contexts where their advantageous optical properties are advisable.

According to its third object, the present invention relates to lithium aluminosilicate glasses, precursors of the glass-ceramics of the invention, as described above. Said glasses have in a characteristic way, a composition with which said glass-ceramics may be obtained. Said glasses generally have a composition which matches that of said glass-ceramics but the matching is not inevitably complete insofar that one skilled in the art perfectly understands that the heat treatments imposed to the glasses for obtaining glass-ceramics may somewhat affect the composition of the material. Said glasses are particularly of interest in that they have an advantageous high temperature viscosity (low viscosity) as well as interesting devitrification properties (see above), compatible with the application of forming methods by lamination and floating.

According to its fourth and fifth objects, the present invention respectively relates to a method for elaborating a glass-ceramic of the invention, as described above and to a method for elaborating an article at least partly consisting of a glass-ceramic of the invention as described above.

Said methods are methods by analogy.

Conventionally, said method for elaborating a glass-ceramic comprises the heat treatment of a batch mixture of raw materials able to vitrify, containing SnO₂ as fining agent, under conditions which successively provide melting, fining and ceramming by a first nucleation step and a second step for growing crystals.

In a characteristic way, said batch mixture has a composition with which a glass-ceramic of the invention can be obtained, having the weight composition indicated above and said ceramming is applied:
- in a temperature interval between 650 and 850°C, for 15 minutes to 4 hours, for the nucleation step, and
- in a temperature interval between 860 and 935°C, for 10 minutes to 2 hours, for the crystal growth step.

The ceramming applied under the conditions above on a glass which has the indicated composition leads to the expected result, most particularly in terms of the β-quartz crystallites size.

Within the scope of the present invention, optimization of optical properties of the glass-ceramic can be obtained by acting on the exact composition of the batch mixture and on the parameters of the ceramming cycle.

Conventionally, said method for elaborating an article successively comprises:
- melting a batch mixture of raw materials able to vitrify, said batch mixture containing SnO₂ as fining agent; followed by fining the obtained molten glass;
- cooling the obtained fined molten glass and simultaneously shaping it into the desired shape for the intended article; and
- ceramming the shaped glass, said ceramming (heat treatment) comprising a first nucleation step and a second crystal growth step.

In a characteristic way, said batch mixture has a composition with which a glass-ceramic of the invention can be obtained, having the weight composition indicated above and the ceramming heat treatment is applied:
- in a temperature interval between 650 and 850°C, for 15 minutes to 4 hours for the nucleation step, and
- in a temperature interval between 860 and 935°C, for 10 minutes to 2 hours for the crystal growth step.

The ceramming applied under the conditions above on a glass which has the indicated composition leads to the expected result, most particularly in terms of the β-quartz crystallites size.

Within the scope of the present invention, optimization of the optical properties of the glass-ceramic can be obtained by acting on the composition of the batch mixture and on the parameters of the ceramming cycle.

General remarks may be expressed hereafter concerning the indicated ceramming cycle.

The ceramming heat treatment, as characterized above, ensures nucleation (a nucleation step applied at at least 650°C) and the obtaining of a glass-ceramic containing a β-quartz solid solution as a main crystalline phase (a crystal growth step applied at a temperature not exceeding 935°C).

There will not be sufficient formation of seeds and the material then tends to be a diffusing material, if the nucleation temperature interval is not suitable (i.e. out of the indicated range of 650-850°C) or if the duration in this interval is too short (of less than 15 mins).

Moreover, if the growth temperature is too low (below 860°C), the obtained glass-ceramics tend to exhibit significant diffusion, and if said growth temperature is on the contrary too high (i.e. > 935°C), the obtained glass-ceramics tend to become opaque.

Let us note here that obtaining the glass-ceramics of the invention from a precursor glass obtained by floating, is not excluded.

Now, the intention is to illustrate the invention by the examples hereafter.

### Examples

- In order to produce 1kg precursor glass batches, the raw materials, in the proportions (proportions expressed as oxides) as copied into the first portion of Table 1 (1-A-1-F) hereafter, were carefully mixed.
   The mixtures were placed for melting in platinum crucibles. The crucibles containing said mixtures were then introduced into an oven preheated to 1,550°C. They underwent therein a melting cycle of the type hereafter:
   - rise in temperature from 1,550°C to 1,650°C, in 2 h;
   - maintaining 1,650°C for between 5.5h and 16h.

   The crucibles were then taken out of the oven and the molten glass was poured on a preheated steel plate. It was laminated thereon down to a thickness of 6 mm. Glass plates were thereby obtained. They were annealed at 650°C for one hour and then gently cooled.
- The properties of the obtained glasses are indicated in the second portion of Table 1 hereafter.
   T₃₀₀ₚₒᵢₛₑₛ(°C) corresponds to the temperature at which the viscosity of the glass is 300 poises.
   T_{liq}(°C) is the liquidus temperature. In fact, the liquidus is given by an interval of temperatures and of associated viscosities: the highest temperature corresponds to the minimum temperature at which no crystal is observed, the lowest temperature to the maximum temperature at which crystals are observed.
   The devitrification characteristics (low and high liquidus temperatures) were determined in the following way. Glass samples (0.5 cm³) were subjected to the following heat treatment:
   - introduction into an oven preheated to 1,430°C,
   - maintaining this temperature for 30 mins,
   - temperature decrease down to the test temperature, T, at a rate of 10°C/min,
   - maintaining this temperature for 17h,
   - quenching the samples.
   The possibly present crystals are observed with optical microscopy.
- The applied ceramming (in a static oven) is specified in the third portion of the table. In fact, two ceramming cycles were used, called cycle P and cycle C.
   These ceramming cycles are described hereafter. Cycle P:
   - rise in temperature from room temperature (25°C) to 650°C, at a heating rate of 30°C/min;
   - rise in temperature from 650°C to 820°C, in 80 mins (a ramp of 2.2°C/min);
   - rise in temperature from 820 to 900°C in 25 mins (a ramp of 3°C/min);
   - maintaining at this temperature of 900°C for 40 mins;
   - lowering the temperature with the thermal inertia of the oven.
   Cycle C:
   - rise in temperature from room temperature (25°C) to 650°C, at a heating rate of 30°C/min;
   - rise in temperature from 650°C to 820°C, in 40 mins (a ramp of 4.3°C/min);
   - rise in temperature from 820 to 900°C in 17 mins (a ramp of 4.7°C/min);
   - maintaining at this temperature of 900°C for 15 mins;
   - lowering the temperature with the thermal inertia of the oven.
- The properties of the obtained ceramics are indicated in the last portion of Table 1 hereafter.

Total and diffuse transmission measurements were carried out under 5 mm by using a Varian spectrophotometer (model Cary 500 Scan), equipped with an integrating sphere. The integrated transmission (TL %) and the diffusion percentage (Diffusion %) according to the ASTM D313 standard were calculated from these measurements.

The yellow index (YI) was calculated according to the transmission measurements (color points) according to the ASTM E313 standard.

The percentage of β-quartz phase (relatively to the total crystallized fraction) as well as the average size of the β-quartz crystals are obtained by using a Rietveld refinement method of X-ray diffraction spectra. The figure between brackets indicates said average size of the crystals in nanometers.

CTE represents the coefficient of thermal expansion (between room temperature and 700°C).

Examples 1 to 16 (Table 1-A, 1-B, 1-C and 1-D) illustrate the invention. Examples 17, 18, A, B (Table 1-E), C1-C4 (Table 1-F) are comparative examples.

Examples 2 and 15 are preferred: they display the best properties in term of optical properties for the glass-ceramics and low viscosity at high temperature for the precursor glasses. Examples 16 and comparative example 17 show that an increase of the mean crystal size is detrimental to the transmission. Comparativeexample 17 shows the benefit of having ZnO in the composition: the glass of comparative example 17 does not contain ZnO and display a higher high temperature viscosity than the ZnO containing glasses. The composition of comparative example 18 includes SrO and a weak amount of BaO. The glass shows a very interesting T₃₀₀ₚₒᵢₛₑₛ but the glass-ceramic does not show very good optical properties.

Example A is a glass-ceramic of the Applicant obtained with As₂O₃ as a fining agent (according to US Patent No. 5,070,045), marketed under the name of Keralite.

Example B is a glass-ceramic marketed by Schott under the trademark Pyran® Platinum. Its composition corresponds to the one indicated in US Patent No. 8,053,381. It is therefore obtained with SnO₂ as a fining agent and Nd₂O₃ as a (dis)coloration agent (for concealing the yellow color). The presence of Nd₂O₃, in significant amounts (2,800 ppm), explains the low transmission (TL): 78.6% for a thickness of 5 mm.

With reference to the comparative examples C1-C4, the comments hereafter are added.

The glass-ceramic of Example C1 contains 1% by weight of MgO. This causes marked lowering of the transmission (TL), coupled with a significant increase in the yellow index (YI).

The glass-ceramic of Example C2 contains 1.4% by weight of ZrO₂. This leads to insufficient nucleation and induces a low transmission (TL), a high yellow index (YI), as well as extremely high diffusion.

The glass-ceramic of Example C3 has low integrated transmission (TL), combined with a high yellow index (YI). These unsatisfactory properties are related to the presence of too high MgO and SnO₂ contents.

The glass-ceramic of Example C4 contains in its composition neither MgO, nor ZnO, nor BaO, nor SrO, which leads to a very stiff glass, with an extremely elevated high temperature viscosity (T₃₀₀ₚₒᵢₛₑₛ=1,714°C).

**Table 1-A**

| | **Example 1** | **Example 2** | **Example 3** | **Example 4** |
|---|---|---|---|---|
| **SiO₂** | 65.296 | 66.288 | 65.303 | 65.303 |
| **Al₂O₃** | 21.12 | 21.00 | 20.62 | 20.62 |
| **Li₂O** | 3.67 | 3.50 | 3.67 | 3.67 |
| **MgO** | | | | |
| **ZnO** | 1.99 | 1.60 | 1.50 | 0.40 |
| **TiO₂** | 2.58 | 2.60 | 2.58 | 2.58 |
| **ZrO₂** | 1.68 | 1.70 | 1.68 | 1.68 |
| **SnO₂** | 0.30 | 0.30 | 0.30 | 0.30 |
| **As₂O₃** | | | | |
| **BaO** | 2.50 | 2.50 | 3.49 | 4.59 |
| **SrO** | | | | |
| ***ZnO*+*BaO*+*SrO*** | *4.49* | *4.10* | *4.99* | *4.99* |
| **Na₂O** | | 0.50 | | |
| **K₂O** | 0.85 | | 0.85 | 0.85 |
| ***Na₂O*+*K₂O*** | | | | |
| **P₂O₅** | | | | |
| **Nd₂O₃** | | | | |
| **CoO** | | | | |
| **Fe₂O₃** | 0.0140 | 0.0120 | 0.0070 | 0.0070 |
| **T₃₀₀ₚₒᵢₛₑₛ (°C)** | 1633 | 1650 | 1648 | 1662 |
| **T_{liq} (°C)** | 1330-1350 | 1325-1350 | 1340-1350 | 1340-1355 |
| **Viscosity at T_{liq} (poises)** | 12560-7950 | 13470-9230 | 10550-9080 | 11940-9560 |
| **Ceramming** | P | P | P | P |
| **Optical Properties (5 mm)** | | | | |
| **TL (%)** | 84.4 | 84.72 | 85.5 | 85.6 |
| **YI** | 12.3 | 9.33 | 10.9 | 8.7 |
| **Diffusion (%)** | 1.2 | 0.2 | 0.6 | 0.7 |
| **β-quartz % (nm)** | 96.6 (21) | 94.7 (26) | 92.1 (22) | 91.1 (22) |
| **CTE_{25-700°C} (x10⁻⁷K⁻¹)** | -1.2 | -3.2 | 0.4 | 3.9 |

**Table 1-B**

| | **Example 5** | **Example 6** | **Example 7** | **Example 8** |
|---|---|---|---|---|
| **SiO₂** | 66.2875 | 66.788 | 65.788 | 66.788 |
| **Al₂O₃** | 21.00 | 20.50 | 21.50 | 21.00 |
| **Li₂O** | 3.50 | 3.50 | 3.50 | 3.50 |
| **MgO** | | | | |
| **ZnO** | 1.60 | 1.60 | 1.60 | 1.10 |
| **TiO₂** | 2.60 | 2.60 | 2.60 | 2.60 |
| **ZrO₂** | 1.70 | 1.70 | 1.70 | 1.70 |
| **SnO₂** | 0.30 | 0.30 | 0.30 | 0.30 |
| **As₂O₃** | | | | |
| **BaO** | 2.50 | 2.50 | 2.50 | 2.50 |
| ***SrO*** | | | | |
| ***ZnO*+*BaO*+*SrO*** | *4.10* | *4.10* | *4.10* | *3.60* |
| **Na₂O** | 0.50 | 0.50 | 0.50 | 0.50 |
| **k₂O** | | | | |
| ***Na₂O*+*K₂O*** | | | | |
| **P₂O₅** | | | | |
| **Nd₂O₃** | | | | |
| **CoO** | 0.0005 | | | |
| **Fe₂O₃** | 0.0120 | 0.0120 | 0.0120 | 0.0120 |
| **T₃₀₀ₚₒᵢₛₑₛ (°C)** | 1650 | | | |
| **T_{liq} (°C)** | 1325-1350 | | | |
| **Viscosity at T_{liq} (poises)** | 13470-9230 | | | |
| **Ceramming** | P | P | P | P |
| **Optical properties (5mm)** | | | | |
| **TL (%)** | 84.6 | 84.6 | 84.5 | 84.8 |
| **YI** | 8.0 | 10.3 | 9.2 | 8.9 |
| **Diffusion (%)** | 0.6 | 0.2 | 0.3 | 2.0 |
| **β-quartz% (nm)** | 94.7 (26) | 95.4 (24) | 96.2 (29) | 95.9 (29) |
| **CTE_{25-700°C} (x10⁻⁷K⁻¹)** | | | | -3.0 |

**Table 1-C**

| | **Example 9** | **Example 10** | **Example 11** | **Example 12** |
|---|---|---|---|---|
| **SiO₂** | 65.788 | 66.538 | 66.388 | 66.788 |
| **Al₂O₃** | 21.00 | 21.00 | 21.00 | 21.00 |
| **Li₂O** | 3.50 | 3.50 | 3.50 | 3.50 |
| **MgO** | | | | |
| **ZnO** | 2.10 | 1.60 | 1.60 | 1.60 |
| **TiO₂** | 2.60 | 2.35 | 2.60 | 2.60 |
| **ZrO₂** | 1.70 | 1.70 | 1.70 | 1.70 |
| **SnO₂** | 0.30 | 0.30 | 0.20 | 0.30 |
| **As₂O₃** | | | | |
| **BaO** | 2.50 | 2.50 | 2.50 | 2.50 |
| ***SrO*** | | | | |
| ***ZnO*+*BaO*+*SrO*** | *4.60* | *4.10* | *4.10* | *4.10* |
| **Na₂O** | 0.50 | 0.50 | 0.50 | |
| **K₂O** | | | | |
| ***Na₂O*+*K₂O*** | | | | |
| **P₂O₅** | | | | |
| **Nd₂O₃** | | | | |
| **CoO** | | | | |
| **Fe₂O₃** | 0.0120 | 0.0120 | 0.0120 | 0.0120 |
| **T₃₀₀ₚₒᵢₛₑₛ (°C)** | | | | |
| **T_{liq} (°C)** | | | | |
| **Viscosity at T_{liq} (poises)** | | | | |
| **Ceramming** | P | P | P | P |
| **Optical properties (5 mm)** | | | | |
| **TL (%)** | 84.6 | 85.5 | 85.2 | 84.9 |
| **YI** | 10.1 | 8.3 | 7.9 | 8.6 |
| **Diffusion (%)** | 0.5 | 0.4 | 0.5 | 0.1 |
| **β-quartz % (nm)** | 95.8 (25) | 95.3 (27) | | |
| **CTE_{25-700°C} (x10⁻⁷K⁻¹)** | | | | -7.6 |

**Table 1-D**

| | **Example 13** | **Example 14** | **Example 15** | **Example 16** |
|---|---|---|---|---|
| **SiO₂** | 65.788 | 66.2915 | 64,989 | 66,5883 |
| **Al₂O₃** | 21.00 | 21.00 | 21,80 | 21,30 |
| **Li₂O** | 3.50 | 3.50 | 4,10 | 3,00 |
| **MgO** | | | | |
| **ZnO** | 1.60 | 1.60 | 0,70 | 1,50 |
| **TiO₂** | 2.60 | 2.60 | 2,80 | 2,70 |
| **ZrO₂** | 1.70 | 1.70 | 1,70 | 1,70 |
| **SnO₂** | 0.30 | 0.30 | 0,28 | 0,30 |
| **As₂O₃** | | | | |
| **BaO** | 2.50 | 2.50 | 3,50 | 2,50 |
| ***SrO*** | | | | |
| ***ZnO*+*BaO*+*SrO*** | *4.10* | *4.10* | *4,20* | *4,00* |
| **Na₂O** | 1,00 | 0,50 | 0,12 | 0,40 |
| **K₂O** | | | | |
| ***Na₂O*+*K₂O*** | | | *0,12* | |
| **P₂O₅** | | | | |
| **Nd₂O₃** | | | | |
| **CoO** | | | | |
| **Fe₂O₃** | 0.0120 | 0.0085 | 0,0110 | 0,0117 |
| **T₃₀₀ₚₒᵢₛₑₛ (°C)** | | | 1617 | |
| **T_{liq} (°C)** | | | 1340 - 1360 | |
| **Viscosity at T_{liq} (poises)** | | | 6000-8000 | |
| **Ceramming** | P | P | P | P |
| **Optical properties (5 mm)** | | | | |
| **TL (%)** | 85.3 | 86.3 | 85,7 | 83,2 |
| **YI** | 10.8 | 7.1 | 8,6 | 10,9 |
| **Diffusion (%)** | 1.1 | 0.1 | 0,2 | 0,6 |
| **β-quartz% (nm)** | | 94.3 (25) | 96.2 (24) | 95.4 (31) |
| **CTE_{25-700°C} (x10⁻⁷K⁻¹)** | | | -2,1 | |

**Table 1-E**

| | **Example 17** | **Example 18** | **A** | **B** |
|---|---|---|---|---|
| **SiO₂** | 66,570 | 64,116 | 67.634 | 65.525 |
| **Al₂O₃** | 21,10 | 22,20 | 19.84 | 22.50 |
| **Li₂O** | 3,50 | 4,10 | 3.35 | 4.00 |
| **MgO** | | | 1.29 | 1.02 |
| **ZnO** | | 0,80 | 1.57 | 0.43 |
| **TiO₂** | 2,40 | 2,70 | 2.61 | 1.60 |
| **ZrO₂** | 1,80 | 1,90 | 1.72 | 1.98 |
| **SnO₂** | 0,26 | 0,27 | | 0.40 |
| **As₂O₃** | | | 0.80 | |
| **BaO** | 4,00 | 1,80 | 0.81 | |
| ***SrO*** | | 1,90 | | |
| ***ZnO*+*BaO*+*SrO*** | *4,00* | *4,50* | *2.38* | *0.43* |
| **Na₂O** | 0,36 | 0,20 | 0.15 | 0.75 |
| **K₂O** | | | 0.21 | 0.20 |
| ***Na₂O*+*K₂O*** | | | *0.36* | *0.95* |
| **P₂O₅** | | | | 1.30 |
| **Nd₂O₃** | | | | 0.2800 |
| **CoO** | | | | |
| **Fe₂O₃** | 0,0100 | 0,0140 | 0.0160 | 0.0150 |
| **T₃₀₀ₚₒᵢₛₑₛ (°C)** | 1686 | 1598 | 1650 | |
| **T_{liq} (°C)** | | | 1340-1350 | |
| **Viscosity at T_{liq} (poises)** | | | 9480-8210 | |
| **Ceramming** | P | P | P | |
| **Optical properties (5 mm)** | | | | |
| **TL (%)** | 83,4 | 84,2 | 87.0 | 78.6 |
| **YI** | 10,6 | 11,5 | 11.4 | 8.0 |
| **Diffusion (%)** | 0,7 | 0,2 | 0.7 | 1.1 |
| **β-quartz% (nm)** | 96,8 (30) | 94,6 (26) | 93,6 (32) | 93,4 (46) |
| **CTE_{25-700°C} (x10⁻⁷K⁻¹)** | 5,6 | -1,7 | | |

**Table 1-F**

| | **C1** | **C2** | **C3** | **C4** |
|---|---|---|---|---|
| **SiO₂** | 65.288 | 66.588 | 66.488 | 70.388 |
| **Al₂O₃** | 21.00 | 21.00 | 20.50 | 21.00 |
| **Li₂O** | 3.50 | 3.50 | 3.50 | 3.50 |
| **MgO** | 1.00 | | 1.20 | |
| **ZnO** | 1.60 | 1.60 | 1.60 | |
| **TiO₂** | 2.60 | 2.60 | 1.80 | 2.60 |
| **ZrO₂** | 1.70 | 1.40 | 1.70 | 1.70 |
| **SnO₂** | 0.30 | 0.30 | 1.20 | 0.30 |
| **As₂O₃** | | | | |
| **BaO** | 2.50 | 2.50 | 2.00 | |
| ***ZnO*+*BaO*+*SrO*** | *4.10* | *4.10* | *3.60* | |
| **Na₂O** | 0.50 | 0.50 | | 0.50 |
| **K₂O** | | | | |
| ***Na₂O*+*K₂O*** | | | | |
| **P₂O₅** | | | | |
| **Nd₂O₃** | | | | |
| **CoO** | | | | |
| **Fe₂O₃** | 0.0120 | 0.0120 | 0.0120 | 0.0120 |
| **T₃₀₀ₚₒᵢₛₑₛ (°C)** | | | | 1714 |
| **T_{liq} (°C)** | | | | |
| **Viscosity at T_{liq} (poises)** | | | | |
| **Ceramming** | P | P | C | |
| **Optical properties (5 mm)** | | | | |
| **TL (%)** | 82.6 | 67.6 | 80.9 | |
| **YI** | 15.5 | 29.5 | 30.2 | |
| **Diffusion (%)** | 0.8 | 8.1 | 0.9 | |
| **β-quartz β% (nm)** | 94.8 (26) | 96.9 (36) | 94.9 (45) | |
| **CTE_{25-700°C} (x10⁻⁷K⁻¹)** | 4.7 | | | |

## Claims

1. A transparent and essentially colorless and non-diffusing glass-ceramic of the lithium aluminosilicate type containing a β-quartz solid solution as main crystalline phase, wherein :
- its composition, free of arsenic oxide, antimony oxide and rare earth oxide except for inevitable trace amounts, contains, expressed as percentages by weight of oxides:
62-72% of SiO₂,
20-23% of Al₂O₃,
2.8-5% of Li₂O,
0.1-0.6% of SnO₂,
1.9-4% of TiO₂,
1.6-3% of ZrO₂,
less than 0.4% of MgO,
0.4-3% of ZnO and 2.1-5% of BaO, with 2.5-6% of ZnO + BaO + SrO,
less than 250 ppm of Fe₂O_{3;} and
- the crystallites present in said β-quartz solid solution have an average size of less than 35 nm, advantageously less than 30 nm.

2. The glass-ceramic according to claim 1, the composition of which contains less than 0.1% of MgO.

3. The glass-ceramic according to claim 2, the composition of which is free of MgO except for inevitable trace amounts.

4. The glass-ceramic according to any of claims 1 to 3, the composition of which contains from 3.5 to 5% of ZnO + BaO + SrO.

5. The glass-ceramic according to any of claims 1 to 4, the composition of which contains from 1.6 to 2% of ZnO.

6. The glass-ceramic according to any of claims 1 to 5, the composition of which contains no SrO.

7. The glass-ceramic according to any one of claims 1 to 6, the composition of which contains from 2.5 to 5% of BaO.

8. The glass-ceramic according to any of claims 1 to 7, the composition of which, expressed as percentages by weight of oxides, contains, for at least 97% of its weight:
| | |
|---|---|
| SiO₂ | 62-72 |
| Al₂O₃ | 20-23 |
| Li₂O | 2.8-5 |
| TiO₂ | 1.9-4 |
| ZrO₂ | 1.6-3 |
| SnO₂ | 0.1-0.6 |
| MgO | less than 0.4% |
| ZnO | 0.4-3 |
| BaO | 2.1-5 |
| SrO | 0-5 |
| CaO | 0-1 |
| Na₂O | 0-1 |
| K₂O | 0-1 |
| Fe₂O₃ | less than 250 ppm |
| CoO | 0-30 ppm |
| P₂O₅ | 0-3. |

9. The glass-ceramic according to any of claims 1 to 8, the composition of which, expressed as percentages by weight of oxides, contains, for at least 97% of its weight:
| | |
|---|---|
| SiO₂ | 63-69 |
| Al₂O₃ | 20-22 |
| Li₂O | 3-4.5 |
| TiO₂ | 2-3 |
| ZrO₂ | 1.6-2 |
| SnO₂ | 0.1-0.4 |
| MgO | less than 0.1%, |
| ZnO | 0.4-2 |
| BaO | 2.1-5, advantageously 2.1-4 |
| CaO | 0-1 |
| Na₂O | 0-1 |
| K₂O | 0-1 |
| Fe₂O₃ | less than 180 ppm |
| CoO | 0-10 ppm |
| P₂O₅ | 0-2. |

10. The glass-ceramic according to any of claims 1 to 8, the composition of which, expressed as percentages by weight of oxides, contains, for at least 97% of its weight:
| | |
|---|---|
| SiO₂ | 63-69 |
| Al₂O₃ | 20-22 |
| Li₂O | 3-4 |
| TiO₂ | 2-3 |
| ZrO₂ | 1.6-2 |
| SnO₂ | 0.1-0.4 |
| MgO | less than 0.1%, |
| ZnO | 1.6-2 |
| BaO | 2.1-5, advantageously 2.5-5 |
| CaO | 0-1 |
| Na₂O | 0-1 |
| K₂O | 0-1 |
| Fe₂O₃ | less than 180 ppm |
| CoO | 0-10 ppm |
| P₂O₅ | 0-2. |

11. The glass-ceramic according to any of claims 1 to 10, having an integrated transmission for a thickness of 5 mm, of more than 81%, advantageously more than 84%, a yellow index for a thickness of 5 mm, of less than 14, advantageously less than 12 and a diffusion percentage for a thickness of 5 mm, of less than 2.5%, advantageously less than 1.5%.

12. An article at least partly, advantageously totally consisting of a glass-ceramic according to any of claims 1 to 11, notably consisting in a fireproof door or window, in a cooking top plate or in a shield.

13. A lithium aluminosilicate glass, precursor of a glass-ceramic according to any of claims 1 to 11, the composition of which allows a glass-ceramic according to any of claims 1 to 11 to be obtained.

14. A method for elaborating a glass-ceramic according to any of claims 1 to 11, comprising the heat treatment of a batch mixture of raw materials able to vitrify, containing SnO₂ as a fining agent, under conditions which successively ensure melting, fining and ceramming by a first nucleation step and a second crystal growth step, **characterized in that** said batch mixture has a composition with which a glass-ceramic having the weight composition according to any of claims 1 to 10 can be obtained; and **in that** said ceramming is applied:
- in a temperature interval between 650 and 850°C, for 15 minutes to 4 hours for the nucleation step, and
- in a temperature interval between 860 and 935°C, for 10 minutes to 2 hours for the crystal growth step.

15. A method for elaborating an article according to claim 12, in a glass-ceramic according to any of claims 1 to 11, successively comprising:
- melting a batch mixture of raw materials able to vitrify, said batch mixture containing SnO₂ as a fining agent; followed by fining the obtained molten glass;
- cooling the obtained fined molten glass and simultaneously shaping it into the desired shape for the targeted article; and
- ceramming the shaped glass, by a first nucleation step and a second crystal growth step;
said batch mixture having a composition with which a glass-ceramic having the weight composition according to any of claims 1 to 10 can be obtained; and the ceramming being applied:
- in a temperature interval between 650 and 850°C, for 15 minutes to 4 hours for the nucleation step, and
- in a temperature interval between 860 and 935°C, for 10 minutes to 2 hours for the crystal growth step.

## Patentansprüche

1. Transparente und nahezu farblose und diffusionslose Glaskeramik vom Lithium-Aluminosilicattyp enthaltend eine feste β-Quarzlösung als kristalline Hauptphase, wobei:
- ihre Zusammensetzung, die frei von Arsenoxid, Antimonoxid und Seltenerdeoxid, außer unvermeidlichen Spurenmengen, ist, als Gewichtsprozentsätze von Oxiden ausgedrückt, enthält:
62 - 72 % SiO₂,
20 - 23 % Al₂O₃,
2,8 - 5 % Li₂O,
0,1 - 0,6 % SnO₂,
1,9 - 4 % TiO₂,
1,6 - 3 % ZrO₂,
weniger als 0,4 % MgO,
0,4 - 3 % ZnO und 2,1 - 5 % BaO, mit 2,5 - 6 % ZnO + BaO + SrO,
weniger als 250 ppm Fe₂O₃, und
- die in der festen β-Quarzlösung vorliegenden Kristallite eine durchschnittliche Größe von weniger als 35 nm, vorteilhafterweise weniger als 30 nm, aufweisen.

2. Glaskeramik nach Anspruch 1, deren Zusammensetzung weniger als 0,1 % MgO enthält.

3. Glaskeramik nach Anspruch 2, deren Zusammensetzung frei von MgO, mit Ausnahme unvermeidlicher Spurenmengen, ist.

4. Glaskeramik nach einem der Ansprüche 1 bis 3, deren Zusammensetzung 3,5 bis 5 % ZnO + BaO + SrO enthält.

5. Glaskeramik nach einem der Ansprüche 1 bis 4, deren Zusammensetzung 1,6 bis 2 % ZnO enthält.

6. Glaskeramik nach einem der Ansprüche 1 bis 5, deren Zusammensetzung kein SrO enthält.

7. Glaskeramik nach einem der Ansprüche 1 bis 6, deren Zusammensetzung 2,5 bis 5 % BaO enthält.

8. Glaskeramik nach einem der Ansprüche 1 bis 7, deren Zusammensetzung, als Gewichtsprozentsätze von Oxiden ausgedrückt, pro mindestens 97 % ihres Gewichts enthält:
| | |
|---|---|
| SiO₂ | 62 - 72 |
| Al₂O₃ | 20 - 23 |
| Li₂O | 2,8 - 5 |
| TiO₂ | 1,9 - 4 |
| ZrO₂ | 1,6 - 3 |
| SnO₂ | 0,1 - 0,6 |
| MgO | weniger als 0,4 %, |
| ZnO | 0,4 - 3 |
| BaO | 2,1 - 5 |
| SrO | 0 - 5 |
| CaO | 0 - 1 |
| Na₂O | 0 - 1 |
| K₂O | 0 - 1 |
| Fe₂O₃ | weniger als 250 ppm |
| CoO | 0 - 30 ppm |
| P₂O₅ | 0 - 3. |

9. Glaskeramik nach einem der Ansprüche 1 bis 8, deren Zusammensetzung, als Gewichtsprozentsätze von Oxiden ausgedrückt, pro mindestens 97 % ihres Gewichts enthält:
| | |
|---|---|
| SiO₂ | 63 - 69 |
| Al₂O₃ | 20 - 22 |
| Li₂O | 3 - 4,5 |
| TiO₂ | 2 - 3 |
| ZrO₂ | 1,6 - 2 |
| SnO₂ | 0,1 - 0,4 |
| MgO | weniger als 0,1 %, |
| ZnO | 0,4 - 2 |
| BaO | 2,1 - 5, vorteilhafterweise 2,1 - 4 |
| CaO | 0 - 1 |
| Na₂O | 0 - 1 |
| K₂O | 0 - 1 |
| Fe₂O₃ | weniger als 180 ppm |
| CoO | 0 - 10 ppm |
| P₂O₅ | 0 - 2. |

10. Glaskeramik nach einem der Ansprüche 1 bis 8, deren Zusammensetzung, als Gewichtsprozentsätze von Oxiden ausgedrückt, pro mindestens 97 % ihres Gewichts enthält:
| | |
|---|---|
| SiO₂ | 63 - 69 |
| Al₂O₃ | 20 - 22 |
| Li₂O | 3 - 4 |
| TiO₂ | 2 - 3 |
| ZrO₂ | 1,6 - 2 |
| SnO₂ | 0,1 - 0,4 |
| MgO | weniger als 0,1 %, |
| ZnO | 1,6 - 2 |
| BaO | 2,1 - 5, vorteilhafterweise 2,5 - 5 |
| CaO | 0 - 1 |
| Na₂O | 0 - 1 |
| K₂O | 0 - 1 |
| Fe₂O₃ | weniger als 180 ppm |
| CoO | 0 - 10 ppm |
| P₂O₅ | 0 - 2. |

11. Glaskeramik nach einem der Ansprüche 1 bis 10, die eine integrierte Transmission, für eine Dicke von 5 mm, von mehr als 81 %, vorteilhafterweise mehr als 84 %, einen Gelbindex, für eine Dicke von 5 mm, von weniger als 14, vorteilhafterweise weniger als 12, und einen Diffusionsprozentsatz, für eine Dicke von 5 mm, von weniger als 2,5 %, vorteilhafterweise weniger als 1,5 %, aufweist.

12. Artikel, der mindestens teilweise, vorteilhafterweise vollständig, aus einer Glaskeramik nach einem der Ansprüche 1 bis 11 besteht, insbesondere aus einer feuerfesten Tür oder einem feuerfesten Fenster in einer Kochplatte oder einem Schutzschirm besteht.

13. Lithium-Aluminosilicatglas, Vorläufer einer Glaskeramik nach einem der Ansprüche 1 bis 11, dessen Zusammensetzung gestattet, eine Glaskeramik nach einem der Ansprüche 1 bis 11 zu erhalten.

14. Verfahren zum Ausarbeiten einer Glaskeramik nach einem der Ansprüche 1 bis 11, umfassend die Hitzebehandlung einer Chargenmischung von Rohmaterialien, die in der Lage sind, glasartig zu werden, enthaltend SnO₂ als Läuterungsmittel, unter Bedingungen, die nacheinander Schmelzen, Läutern und Keramisieren durch einen ersten Kristallkeimbildungsschritt und einen zweiten Kristallwachstumsschritt sicherstellen, **dadurch gekennzeichnet, dass** die Chargenmischung eine Zusammensetzung aufweist, mit der eine Glaskeramik, die die Gewichtszusammensetzung nach irgendeinem der Ansprüche 1 bis 10 aufweist, erhalten werden kann, und dass das Keramisieren angewendet wird:
- in einer Temperaturspanne zwischen 650 und 850 °C für 15 Minuten bis 4 Stunden lang für den Kristallkeimbildungsschritt und
- in einer Temperaturspanne zwischen 860 und 935 °C für 10 Minuten bis 2 Stunden für den Kristallwachstumsschritt.

15. Verfahren zum Ausarbeiten eines Artikels nach Anspruch 12 aus einer Glaskeramik nach einem der Ansprüche 1 bis 11, nacheinander umfassend:
- Schmelzen einer Chargenmischung von Rohmaterialien, die in der Lage sind, glasartig zu werden, wobei die Chargenmischung SnO₂ als Läuterungsmittel enthält, gefolgt vom Läutern des erhaltenen geschmolzenen Glases,
- Kühlen des erhaltenen geläuterten geschmolzenen Glases und gleichzeitiges Gestalten desselben zu einer erwünschten Gestalt für den angezielten Artikel und
- Keramisieren des gestalteten Glases durch einen ersten Kristallkeimbildungsschritt und einen zweiten Kristallwachstumsschritt,
wobei die Chargenmischung eine Zusammensetzung aufweist, mit der eine Glaskeramik, die eine Gewichtszusammensetzung nach einem der Ansprüche 1 bis 10 aufweist, erhalten werden kann, und das Keramisieren angewendet wird:
- in einer Temperaturspanne zwischen 650 und 850 °C für 15 Minuten bis 4 Stunden für den Kristallkeimbildungsschritt und
- in einer Temperaturspanne zwischen 860 und 935 °C für 10 Minuten bis 2 Stunden den Kristallwachstumsschritt.

## Revendications

1. Vitrocéramique, du type aluminosilicate de lithium, contenant une solution solide de quartz-β comme phase cristalline principale, transparente et essentiellement incolore et non diffusante, dans laquelle :
- sa composition, exempte, à l'exception de traces inévitables, d'oxyde d'arsenic, d'oxyde d'antimoine et d'oxyde de terre rare, renferme, exprimée en pourcentages en masse d'oxydes :
62 - 72 % de SiO₂,
20 - 23 % d'Al₂O₃,
2,8 - 5 % de Li₂O,
0,1 - 0,6 % de SnO₂,
1,9 - 4 % de TiO₂,
1,6 - 3 % de ZrO₂,
moins de 0,4 % de MgO,
0,4 - 3 % de ZnO et 2,1 - 5 % de BaO, avec 2,5 - 6 % de ZnO + BaO + SrO,
moins de 250 ppm de Fe₂O₃ ; et
- les cristallites présentes dans ladite solution solide de quartz-β ont une taille moyenne inférieure à 35 nm, avantageusement inférieure à 30 nm.

2. Vitrocéramique selon la revendication 1, dont la composition renferme moins de 0,1 % de MgO.

3. Vitrocéramique selon la revendication 2, dont la composition est exempte, à l'exception de traces inévitables, de MgO.

4. Vitrocéramique selon l'une quelconque des revendications 1 à 3, dont la composition renferme de 3,5 à 5 % de ZnO + BaO + SrO.

5. Vitrocéramique selon l'une quelconque des revendications 1 à 4, dont la composition renferme de 1,6 à 2 %, de ZnO.

6. Vitrocéramique selon l'une quelconque des revendications 1 à 5, dont la composition ne contient pas de SrO.

7. Vitrocéramique selon l'une quelconque des revendications 1 à 6, dont la composition renferme de 2,5 à 5 % de BaO.

8. Vitrocéramique selon l'une quelconque des revendications 1 à 7, dont la composition, exprimée en pourcentages en masse d'oxydes, renferme, pour au moins 97 % de sa masse :
| | |
|---|---|
| SiO₂ | 62-72 |
| Al₂O₃ | 20-23 |
| Li₂O | 2,8-5 |
| TiO₂ | 1,9-4 |
| ZrO₂ | 1,6-3 |
| SnO₂ | 0,1-0,6 |
| MgO | moins de 0,4 % |
| ZnO | 0,4-3 |
| BaO | 2,1-5 |
| SrO | 0-5 |
| CaO | 0-1 |
| Na₂O | 0-1 |
| K₂O | 0-1 |
| Fe₂O₃ | moins de 250 ppm |
| CoO | 0-30 ppm. |
| P₂O₅ | 0-3. |

9. Vitrocéramique selon l'une quelconque des revendications 1 à 8, dont la composition, exprimée en pourcentages en masse d'oxydes, renferme, pour au moins 97 % de sa masse :
| | |
|---|---|
| SiO₂ | 63-69 |
| Al₂O₃ | 20-22 |
| Li₂O | 3-4,5 |
| TiO₂ | 2-3 |
| ZrO₂ | 1,6-2 |
| SnO₂ | 0,1-0,4 |
| MgO | moins de 0,1 %, |
| ZnO | 0,4-2 |
| BaO | 2,1-5, avantageusement 2,1-4 |
| CaO | 0-1 |
| Na₂O | 0-1 |
| K₂O | 0-1 |
| Fe₂O₃ | moins de 180 ppm |
| CoO | 0-10 ppm |
| P₂O₅ | 0-2. |

10. Vitrocéramique selon l'une quelconque des revendications 1 à 8, dont la composition, exprimée en pourcentages en masse d'oxydes, renferme, pour au moins 97 % de sa masse :
| | |
|---|---|
| SiO₂ | 63-69 |
| Al₂O₃ | 20-22 |
| Li₂O | 3-4 |
| TiO₂ | 2-3 |
| ZrO₂ | 1,6-2 |
| SnO₂ | 0,1-0,4 |
| MgO | moins de 0,1 %, |
| ZnO | 1,6-2 |
| BaO | 2,1-5, avantageusement 2,5-5 |
| CaO | 0-1 |
| Na₂O | 0-1 |
| K₂O | 0-1 |
| Fe₂O₃ | moins de 180 ppm |
| CoO | 0-10 ppm |
| P₂O₅ | 0-2. |

11. Vitrocéramique selon l'une quelconque des revendications 1 à 10, présentant une transmission intégrée, pour une épaisseur de 5 mm, supérieure à 81 %, avantageusement supérieure à 84 %, un indice de jaune, pour une épaisseur de 5 mm, inférieur à 14, avantageusement inférieur à 12 et un pourcentage de diffusion, pour une épaisseur de 5 mm, inférieur à 2,5 %, avantageusement inférieur à 1,5 %.

12. Article constitué, au moins en partie, avantageusement en totalité, d'une vitrocéramique selon l'une quelconque des revendications 1 à 11, consistant notamment en une porte ou fenêtre coupe-feu, en une plaque de cuisson ou en un blindage.

13. Verre d'aluminosilicate de lithium, précurseur d'une vitrocéramique selon l'une quelconque des revendications 1 à 11, dont la composition permet d'obtenir une vitrocéramique selon l'une quelconque des revendications 1 à 11.

14. Procédé d'élaboration d'une vitrocéramique selon l'une quelconque des revendications 1 à 11, comprenant le traitement thermique d'une charge de matières premières vitrifiable, renfermant SnO₂ comme agent d'affinage, dans des conditions qui assurent successivement fusion, affinage et céramisation par une première étape de nucléation et une seconde étape de croissance des cristaux, **caractérisé en ce que** ladite charge a une composition qui permet d'obtenir une vitrocéramique présentant la composition massique énoncée dans l'une quelconque des revendications 1 à 10 ; et **en ce que** ladite céramisation est mise en œuvre :
- dans un intervalle de température entre 650 et 850 °C, pendant 15 minutes à 4 heures, pour l'étape de nucléation, et
- dans un intervalle de température entre 860 et 935 °C, pendant 10 minutes à 2 heures, pour l'étape de croissance des cristaux.

15. Procédé d'élaboration d'un article selon la revendication 12, en une vitrocéramique selon l'une quelconque des revendications 1 à 11, comprenant successivement :
- la fusion d'une charge de matières premières vitrifiable, ladite charge renfermant SnO₂ comme agent d'affinage ; suivi de l'affinage du verre fondu obtenu ;
- le refroidissement du verre fondu affiné obtenu et, simultanément, sa mise en forme à la forme désirée pour l'article visé ; et
- un traitement thermique de céramisation dudit verre mis en forme, par une première étape de nucléation et une seconde étape de croissance des cristaux ;
ladite charge ayant une composition qui permet d'obtenir une vitrocéramique présentant la composition massique énoncée selon l'une quelconque des revendications 1 à 10; et en ce que le traitement thermique de céramisation est mis en œuvre :
- dans un intervalle de température entre 650 et 850 °C, pendant 15 minutes à 4 heures, pour l'étape de nucléation, et
- dans un intervalle de température entre 860 et 935 °C, pendant 10 minutes à 2 heures, pour l'étape de croissance des cristaux.
